Europäisches Patentamt

European Patent Office

Office européen des brevets

(19)

(11) **EP 0 778 710 A2**

(12) **EUROPEAN PATENT APPLICATION**

(43) Date of publication:
**11.06.1997 Bulletin 1997/24**

(51) Int. Cl.⁶: $H04N\ 7/52$

(21) Application number: **96118492.6**

(22) Date of filing: **19.11.1996**

(84) Designated Contracting States:
**DE FR GB IT SE**

(30) Priority: **01.12.1995 SE 9504316**

(71) Applicant: **NOKIA TECHNOLOGY GmbH**
**75175 Pforzheim (DE)**

(72) Inventor: **Göransson, Tomas**
**58226 Linköping (SE)**

(54) **A method and system in data transmission**

(57)    A method and a system for the matching of the receiver system clock with the transmitter system clock in an asynchronous data transmission system from a transmitter to a receiver, the matching including frequency as well as counter value. According to the invention the size of a buffer can be minimized by comparing the received references ($PCR_{2,3...}$) with the receiver system clock (STC) after which the difference is derivated (6) and compared with preceding differences, whereupon the rate of change so detected controls the frequency of the receiver system clock.

**Fig.2**

EP 0 778 710 A2

## Description

### Field of the invention

This invention relates to a method and a system for matching the receiver system clock with the clock of the transmitter in asynchronous data transmission from a transmitter to a receiver, the matching relating to frequency as well as counter value.

### Background of the invention

An MPEG (motion picture expert group) transport stream or the like is an asynchronous stream of data that in the case of real time traffic contains "time stamps" representing the system clock of the transmitter. With these time stamps, hereinafter called PCRs (program clock reference), and local, in the transmitter and in a receiver generated time stamps, hereinafter called STCs (system time clock), the system clock of the receiver can be changed such that its frequency matches the system clock of the transmitter. STCs originate from counters of the transmitter and the receiver, respectively, which counters are operated by the transmitter system clock and the receiver system clock, respectively.

To avoid underflow or overflow of an existing buffer of the receiver, it is important that the receiver has a counter matching exactly the system clock of the transmitter, regarding frequency as well as counter value, such that the receiver can read data from said buffer. A buffer in this connection refers to a memory device for compensating a difference of the rate of the information flow or the time of an occurrence when transmitting information from a device to another.

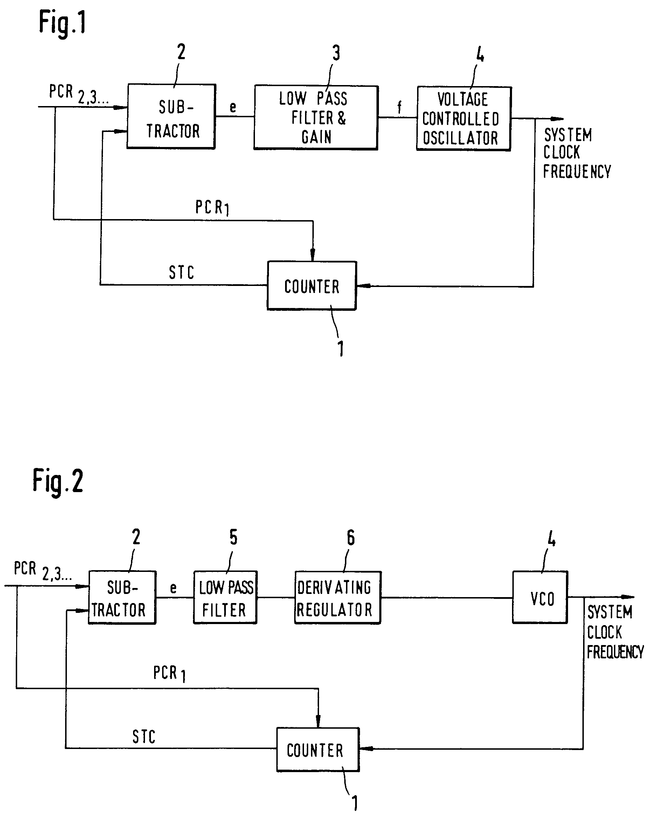

In an ideal data stream, each PCR arrives at the decoder exactly at the time indicated by the value of that PCR. By 'time' is meant the value of the STC of the transmitter. If the clock frequency of the receiver matches exactly that of the transmitter, decoding and presentation of the video and audio signals will automatically have the same rate as those of the transmitter. With matched receiver and transmitter clock frequencies any correct PCR value can be used to set the initial value of the STC of the receiver, and then the STC of the receiver will match that of the transmitter without the need for further adjustments. In practice it is not possible, without references, to generate a frequency of the receiver that matches exactly the frequency of the transmitter. The solution is to make the receiver's STC follow the transmitter's STC by means of references, PCRs. This is realized by using a phase-locked loop, PLL, i.e. a circuit for synchronizing the phase of a variable local oscillator with the phase of a transmitted signal. In this case, the PLL synchronizes the counter values. As an example, figure 1 indicates the PLL recommended with MPEG-2 standard. Thus, in figure 1, a conventional PLL is shown except that the reference and feedback terms are numbers (STC and PCR values) instead of signal events.

At starting of the STC of the receiver a counter 1 of the receiver is loaded with the first arriving of a $PCR_1$. This is called crash load. Subsequently, the PLL operates as a closed loop as follows. At the moment when the next $PCRs_{2,3...}$ arrive, their values, respectively, are compared with the current value of the STC of the receiver in a subtracter 2. The difference, e, is the 'error' of the loop and e is filtered and amplified, indicated by the block 3. The filtered signal, f, is the control signal controlling the instantaneous frequency of a voltage controlled oscillator, VCO 4.

The output of the VCO 4 is an oscillator signal with a nominal frequency of 27 MHz, for example. This signal is used as the system clock frequency within the receiver and is also supplied to the counter 1 producing the current STC.

Thus, the idea of a conventional recovery loop is the starting at the same time by means of the crash load as described above. The difference between STC of the receiver and the PCRs is detected and, if there is a difference, the receiver system clock frequency is adjusted. The purpose of the adjustment of the frequency is to minimize the difference. If, for example, STC of the receiver has a lower frequency than STC of the transmitter, this implies that the frequency must be changed, but to a higher frequency than the actual frequency of the encoder of the transmitter, since the value of the STC of the receiver must catch up with the value of the PCRs before the system has reached its final state.

The problem that makes it more difficult is that the arriving time stamps, $PCR_{2,3...}$, have been delayed in various degree during the transmission. This delay is called jitter. The random appearance of this jitter makes additional means in the clock recovery loop necessary to achieve a good controlling despite the various delays of the time stamps.

A timing recovery circuit of this type is e.g. described in EP-A-0577329. This document describes a solution in which overflow or underflow of the data buffer in the receiver is avoided by firstly using the difference between system timing clock counter value and received reference counter value representing the present jitter delay and by secondly using a buffer fullness information to correct this present jitter delay value for controlling the VCO frequency for locking the phase locked loop.

The solution described in this document makes it possible to use a relatively small buffer size without the danger of overflow or underflow. However, there are situations in which buffer fullness information and jitter delay lead to rather abrupt frequency changes of the receiver system timing clock oscillator.

Such abrupt clock frequency changes can create problems in the receiver when reference oscillators e.g. for chroma demodulation are derived from the system clock. It is therefore an object of the present invention to provide a timing recovery circuit which allows to avoid abrupt frequency changes and still use a small buffer.

## Description of the invention

The invention will now be described by means of the embodiment indicated in the drawings, in which

Figure 1 indicates a conventional PLL circuit for synchronizing the counter value of a local counter with that of transmitted time stamps.

Figure 2 indicates a recovery loop according to a first embodiment of the invention.

Figure 2 indicates a recovery loop according to the invention for matching a receiver system clock with a transmitter system clock, which matching relates to frequency as well as counter value. This is obtained by replacing the block 3 in figure 1, including a low pass filter and gain, by a derivating regulator.

According to an embodiment of the invention a subtracter 2 can be followed by a low pass filter 5 and by a derivating and proportional regulator 6, indicated in figure 2. A regulator being derivating and proportional is a regulator whith an output which is dependent of the rate of the change and the size of the input. The derivating part of the controlling is the core of the invention. Thus, by controlling the clock frequency of the receiver after the derivate of the differences of the two counter values, STC-PCR, the result will be much better than in other solutions. The difference between the counter value of the counter 1 controlled by the receiver system clock and the corresponding references ($STC_m$-$PCR_{2,3...}$), respectively, is detected, and said difference is compared with preceding differences detected, whereupon the rate of the change so detected controls the frequency of the receiver system clock. The size of the change of the difference ($STC_m$-PCR) corresponds to the derivation of said difference. As the counters can be seen as integrators of the clock frequency, the derivative of the difference between the counter values corresponds to the difference of the clock frequency between the receiver and the transmitter. Controlling by frequency difference instead of differences of the values of the counters improves the result. The proportional part of the controlling reduces possible errors in steady state and the low pass filter equilibrates the signal.

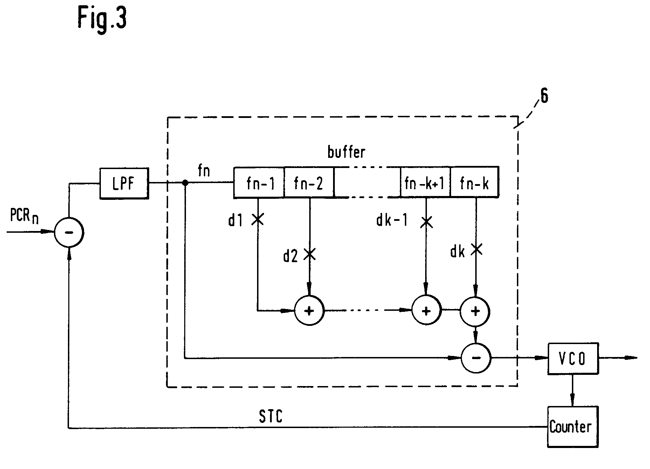

Figure 3 shows a block diagram of the derivating regulator 6 as used in this invention. The counter difference values f are low pass filtered and stored in a buffer. This buffer stores the last k values of f. Each new value of f is entered in the buffer, all old values of f are shifted upwards by one position and the old value of f in the k position is discarded. All present f values in the buffer $f_{n-1}$ to $f_{n-k}$ are weighted with individual weighting factors $d_1$ to $d_k$ whereby

$$d_1 + d_2 + ... + d_{k-1} + d_k + p = 1$$

and p represents the proportional part of the controlling. In praxis p should be close to zero and the values of $d_1$ to $d_k$ not ascending. The weighted f values $d_1 * f_{n-1}$ to $d_k * f_{n-k}$ are added and the resulting sum is compared with the new value of f denoted $f_n$. The result is used to control the VCO.

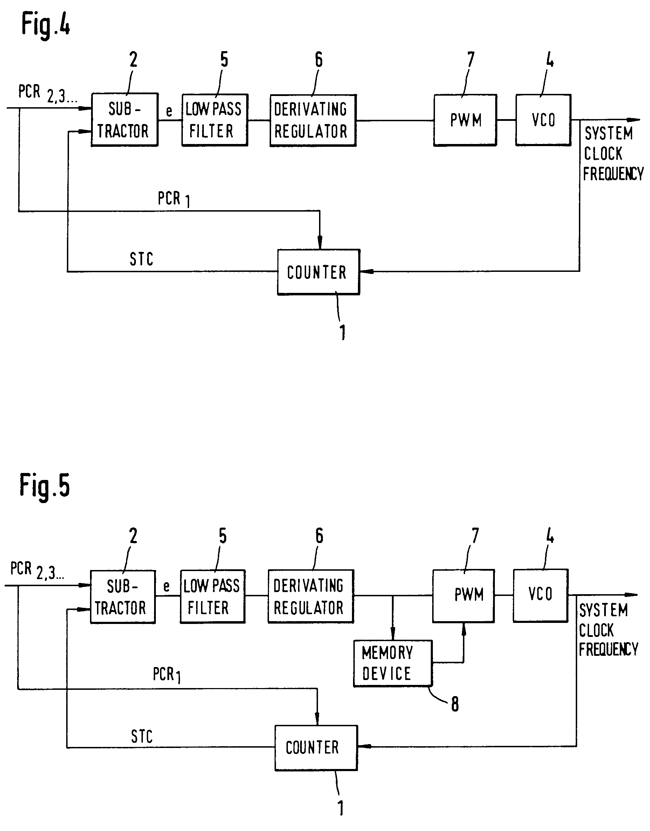

Figure 4 shows a second embodiment of the invention wherein a pulse width modulator, PWM, 7, including a digital-to-analog converter is connected. Figure 5 shows a third embodiment of the invention with a storing device 8. This storing device is a memory storing the latest stable control value, i.e. a control value not being changed essentially during a number of measurements, put into the voltage controlled oscillator 4. Then, this value is used as an initial value for the control value for the voltage controlled oscillator next time the system is set up. Furthermore, elements known per se (not shown) can be included in the system to calculate the average value of several detected differences, the mean value being arranged to control the frequency of the receiver system clock. All said elements are each known to the man skilled in the art and not described here.

Additional advantages of the invention are that the system clock can be recovered in spite of more jitter than with other solutions and the need of additional buffers with PLL in front of the receiver for jitter compensation can be reduced.

In conventional systems a buffer, as is indicated above, combined with a PLL controlled of the rate of the arriving signal, is usually found at the input of the receiver. Moreover, a demultiplexer is arranged at the receiver side to divide a multiplexed transmitted signal into several channels. In many situations only a small part of a signal arriving at the receiver is used. This means that an equilibrating buffer, arranged before the demultiplexer of the receiver, contains information that will not be used. If the intention is to reduce the size of the buffer in a conventional system, the buffer ought to be placed after the demultiplexer.

In an additional system according to the invention a buffer is placed after the demultiplexer (not shown in the drawing) instead of before the demultiplexer, as usually, for being able to reduce the size of the buffer additionally, since only an interesting signal is left. The rate of the information flow out of this buffer is controlled by the receiver system clock, $STC_m$. The advantage of the said placing of the buffer is the possibility of still more reducing the buffer size and even a better compensation using the recovery loop according to the invention and controlling the data output by the time stamps included in that part of the signal used, instead of controlling the data read out rate by the rate of the arriving signal as in a conventional compensating buffer.

It is obvious to the man skilled in the art that the system described only is an example of an element connectable to a recovery loop according to the invention, which is limited to the scope of the accompanying claims only.

## Claims

1. A method, in asynchronous data transmission from a transmitter to a receiver, for matching the frequency and the counter value of the system clock of the receiver ($STC_m$) with the system clock of the transmitter ($STC_s$) by means of references successively received ($PCR_{1,2,3...}$), whereby one received reference ($PCR_1$) determines the initial counter value of the counter (1) controlled by the receiver system clock ($STC_m$), and that thereafter differences between the counter value of the counter (1) controlled by the receiver system clock ($STC_m$) and the corresponding references ($STC_m$-$PCR_{2,3...}$), respectively, are detected, **characterized** in that each said difference ($STC_m$-$PCR_{2,3...}$), is compared with weighted preceding differences detected, whereupon the rate of change so detected controls the frequency of the receiver system clock ($STC_m$).

2. A method according to claim 1, **characterized** in that the rate of change is calculated from several differences detected.

3. A method according to claims 1 or 2, **characterized** in that the latest detected stable control value, supplied to a voltage controlled oscillator, is stored for being used as an initial control value of the voltage controlled oscillator (4).

4. A method according to any one of the preceding claims, **characterized** in that a demultiplexing of the signal transmitted is effected at the input terminal of the receiver, whereafter the demultiplexed signal is supplied to an equilibrating buffer, the output data of which is controlled by the receiver system clock.

5. A system, in asynchronous data transmission from a transmitter to a receiver, for matching the frequency and the counter value of the system clock of the receiver ($STC_m$) with the system clock of the transmitter by means of references successively received ($PCR_{1,2,3...}$), in which one received reference ($PCR_1$) is arranged to be supplied to a counter (1) for the determination of an initial counter value of the system clock of the receiver ($STC_m$), the counter value being arranged to be supplied to a subtractor (2), and that the following references ($PCR_{2,3...}$) are arranged to be supplied to the subtractor (2), **characterized** in that the output of which is arranged to be supplied to a derivating regulator, the output of which is arranged to control a voltage controlled oscillator (4,), which in turn is arranged to control the counter (1) as well as generate the receiver system clock frequency.

6. A system according to claim 5, **characterized** in that said output from the subtractor (2) is arranged to be supplied to a low pass filter (5) and to a proportional and derivating regulator (6).

7. A system according to claim 6, **characterized** in that a pulse width modulator (7) including a digital-to-analog converter is connected after said proportional and derivating regulator (6).

8. A system according to claims 6 or 7, **characterized** in that a storing device (8) for the storage of control values detected is connected after said proportional and derivating regulator (6).

9. A system according to any one of the preceding claims, **characterized** in that an equilibrating buffer is arranged after a demultiplexer at the input terminal of the receiver, the output data of the buffer being arranged to be controlled by the receiver system clock ($STC_m$).

# Fig.1

# Fig.2

# Fig.3

## Fig.4

PCR 2,3...

| 2 | 5 | 6 | 7 | 4 |
|---|---|---|---|---|
| SUB-TRACTOR | LOW PASS FILTER | DERIVATING REGULATOR | PWM | VCO |

e

SYSTEM CLOCK FREQUENCY

PCR 1

STC

COUNTER

1

## Fig.5

PCR 2,3...

| 2 | 5 | 6 | 7 | 4 |
|---|---|---|---|---|
| SUB-TRACTOR | LOW PASS FILTER | DERIVATING REGULATOR | PWM | VCO |

e

SYSTEM CLOCK FREQUENCY

MEMORY DEVICE

8

PCR 1

STC

COUNTER

1